# EUROPEAN PATENT SPECIFICATION

(11) **EP 0 898 874 B1**
(45) Date of publication and mention of the grant of the patent: **10.07.2002**
(21) Application number: 98202773.2
(22) Date of filing: 19.08.1998
(51) Int. Cl.: A01D 78/10

(54) **A hay-making machine**
Heuwerbungsmaschine
Machine de fenaison

(30) Priority: 28.08.1997 NL 1006868
(43) Date of publication of application: 03.03.1999
(73) Proprietor: MAASLAND N.V., 3155 PD Maasland (NL)
(72) Inventor: van den Engel, Alfonsus Jacobus, 3123 CM Schiedam (NL)
(74) Representative: Corten, Maurice Jean F.M.

(56) References cited:
- EP-A- 0 688 494
- DE-A- 2 004 349
- FR-A- 1 363 877
- FR-A- 2 137 369
- GB-A- 2 015 859
- PUBLICITEITSFOLDER VAN FELLA-WERKE "DREIPUNKT -TURBOHEUER TF 4 DN" VERSPREID TIJDENS DLG VAN 19-26 MEI IN MUNCHEN XP002061055

## Description

The invention relates to a hay-making machine provided with mechanically driven rake members that rotate about upwardly orientated axes, which machine is supported by running wheels.

It is known that with this type of machines, storage of the machine when the latter is not used and is not coupled to a tractor, may cause problems because, without additional measures being taken, the machine would overturn and be supported by the tines.

Various solutions to this problem have already been proposed.

For example, from document GB 2 015 859 A it is known to fit an extendable support to the frame of the machine, which support, seen in the direction of travel, is arranged between two rake members.

It is also known to dispose such an extendable support under the rake members.

With machines having two running wheels under the rake member it is known to dispose the running wheels in such a manner that, in its uncoupled position, the machine rests on two running wheels.

The invention has for its object to obtain a hay-making machine of the above-described type, which machine can be stored without additional measures, such as adjustment of supports, being necessary, and without a complicated way of supporting the rake members, e.g. by means of a plurality of running wheels, being required.

According to the invention, there is provided a support at least under one or more of the rake members, with the aid of which support the rake member, after having overturned, can be supported, which support also serves as an arm for the running wheel.

Therefore, by means of the invention it is achieved that storage of the machine can easily take place by overturning of the rake wheel and consequently of the machine.

According to a further aspect of the invention, if the axis of rotation of the rake wheel is in the normal operative position, the support has a downwardly extending portion into which merges a rearwardly and upwardly extending portion which rests on the ground after the rake member has overturned.

The invention will be explained in further detail on the basis of an exemplary embodiment.
Figure 1 is a plan view of the hay-making machine according to the invention;
Figure 2 is, to an enlarged scale, a side view of the machine according to the arrow II in Figure 1, and
Figure 3 is a front view of part of the machine according to the arrow III in Figure 2, to the same scale as Figure 2.

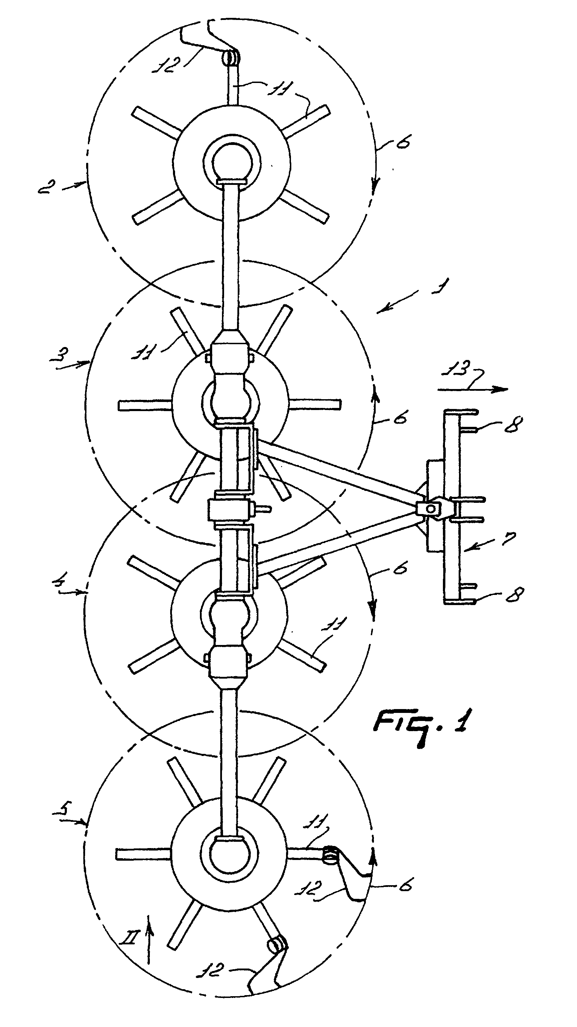

The machine shown in Figures 1, 2 and 3 is a hay-making machine 1 provided with four rake members 2, 3, 4 and 5. As shown in Figure 1, the rake members 2, 3, 4 and 5 rotate in opposite directions, as indicated by the arrows 6.

The machine comprises a three-point trestle 7 with coupling points 8 by means of which the machine can be coupled to a non-shown tractor.

Under the rake members there are provided running wheels 9 by means of which the machine rests on the ground.

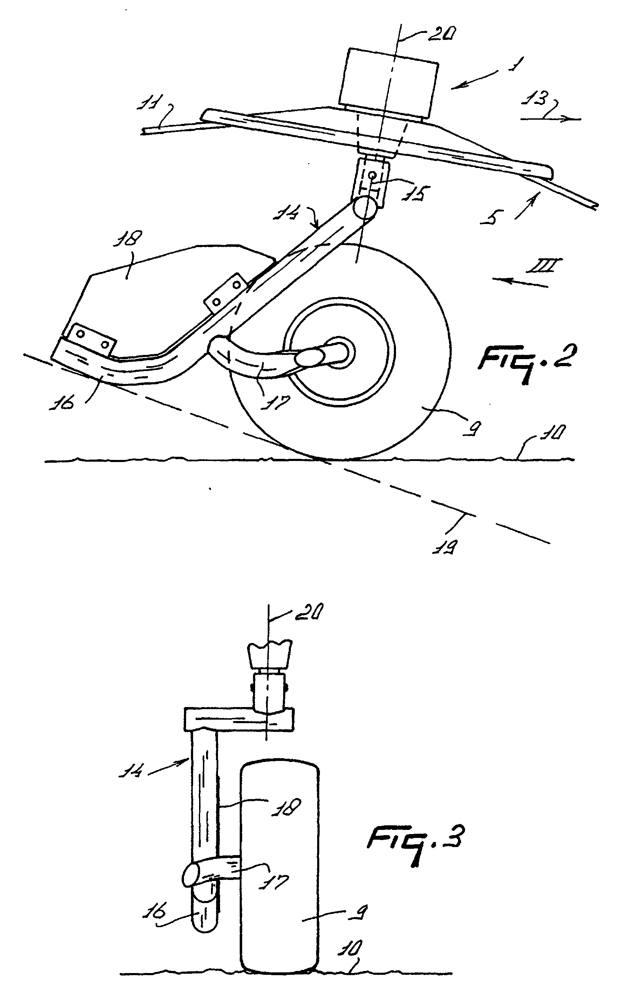

Figure 2 shows the operative position of the machine when the latter rests on the ground represented by an uninterrupted line 10.

As shown in Figure 1, each rake member comprises arms 11 provided with resilient tines 12.

These resilient tines are shown in the operative position in Figure 1. At the front side of the machine which is drawn in the direction 13, they move close to the ground and rake the crop.

However, when the machine is uncoupled from the tractor, the machine overturns about a line extending transversely to the direction of travel and, without countermeasures being taken, the rearmost tines of the rake members come into contact with the ground, which is disadvantageous to the tines.

For the purpose of avoiding this, at least the rake members 3 and 4 are provided with a support 14 which, seen in the direction of travel 13, extends downwards, preferably obliquely downwards, and rearwards. This support 14, which is fastened to a non-rotating part in the centre 15 of the rake member, bends rearwardly at its lower end in such a manner that there is formed a rearwardly projecting portion 16 which projects obliquely upwards in the operative position of the machine.

The support 14 comprises an arm 17 to which there is fitted a running wheel 9, while in this embodiment the support 14, in front view, is located on the left beside the running wheel 9. To the support 14 there is further fastened an anti-winding shield 18 projecting rearwardly, so opposite to the direction of travel.

The function of the machine will be explained in what follows:

If the machine is in the transport position, it is in a position as shown in Figure 2 by the uninterrupted line 10. However, when the machine is uncoupled from the tractor and is stored, the machine overturns and assumes a position in which the interrupted line 19 represents the ground and the portion 16 rests on the ground. In this situation the machine rests on the support and is solidly positioned on the ground while the tines are free from the ground. The function of the anti-winding shield 18, which can be fastened to the support 14 if required, is to prevent the crop from winding around the support 14, the arm 17 and the axle of the running wheel 9.

It is noticed that in this embodiment the rearwardly and upwardly extending portion 16 of the support 14 forms an angle of at least 45° and not exceeding 75° with the axis of rotation 20 of the rake member. The anti-winding shield 18 is disposed near the rake members 3 and 4, i.e. near the rake member 3 at the side of the rake member 4 and, inversely, near the rake member 4 at the side of the rake member 3.

This embodiment is only an exemplary embodiment of the invention.

Of course, other versions of the support are also possible.

## Claims

1. A hay-making machine provided with mechanically driven rake members (2 to 5) that rotate about upwardly orientated axes, which machine is supported by running wheels (9), **characterized in that** at least under one or more of the rake members (2 to 5) there is disposed a support (14) with the aid of which at least one of the rake members (2 to 5), after having overturned, can be supported, which support (14) also comprises an arm (17) for the running wheel (9).

2. A hay-making machine as claimed in claim 1, **characterized in that** the rake member (2 to 5) is fitted to an arm (17), via which arm (17) a running wheel (9) located under the rake member (2 to 5) is supported, which arm (17) also serves as a support.

3. A hay-making machine as claimed in any one of the preceding claims, **characterized in that** the support (14) consists of a plurality of parts (16; 17).

4. A hay-making machine as claimed in any one of the preceding claims, **characterized in that**, seen in the direction of travel (13), the support (14) extends substantially parallel to a plane located beside the running wheel (9).

5. A hay-making machine provided with mechanically driven rake members (2 to 5) that rotate about upwardly orientated axes, in particular as claimed in any one of the preceding claims, **characterized in that**, if the axis of rotation of the rake wheel is in the normal operative position, the support (14) has a downwardly extending portion, into which portion merges a rearwardly and upwardly extending portion (16) which rests on the ground after the rake member has overturned.

6. A hay-making machine as claimed in claim 5, **characterized in that** the arm (17) for the running wheel (9) is fitted to the downwardly extending portion of the support (14).

7. A hay-making machine according to claim 5, **characterized in that** the rearwardly and upwardly extending portion (16) of the support (14) forms an angle of at least 45° and not exceeding 75°, preferably of approximately 65°, with the axis of rotation (20) of the rake wheel.

8. A hay-making machine as claimed in any one of the preceding claims, **characterized in that** a plate (18) extending at least substantially in the normal direction of travel (13) of the machine is fastened to the support (14), which plate has for its object to prevent crop, at least as much as possible, from accumulating at the support (14) and the arm (17) of the running wheel (9).

## Patentansprüche

1. Heuwerbungsmaschine mit mechanisch angetriebenen Rechkörpern (2 bis 5), die sich um aufwärts gerichtete Achsen drehen, wobei die Maschine durch Laufräder (9) abgestützt ist,
**dadurch gekennzeichnet, daß** zumindest unter einem oder unter mehreren der Rechkörper (2 bis 5) eine Stütze (14) angeordnet ist, mit deren Hilfe zumindest einer der Rechkörper (2 bis 5) nach dem Umklappen abgestützt werden kann, wobei die Stütze (14) auch einen Arm (17) für das Laufrad (9) umfaßt.

2. Heuwerbungsmaschine nach Anspruch 1,
**dadurch gekennzeichnet, daß** der Rechkörper (2 bis 5) an einem Arm (17) angebracht ist, wobei über den Arm (17) ein unter dem Rechkörper (2 bis 5) angeordnetes Laufrad (9) abgestützt ist, wobei der Arm (17) auch als Stütze dient.

3. Heuwerbungsmaschine nach einem der vorhergehenden Ansprüche,
**dadurch gekennzeichnet, daß** die Stütze (14) aus einer Vielzahl von Teilen (16; 17) besteht.

4. Heuwerbungsmaschine nach einem der vorhergehenden Ansprüche,
**dadurch gekennzeichnet, daß** sich die Stütze (14) in Arbeitsrichtung (13) betrachtet im wesentlichen parallel zu einer neben dem Laufrad (9) liegenden Ebene erstreckt.

5. Heuwerbungsmaschine mit mechanisch angetriebenen Rechkörpern (2 bis 5), die sich um aufwärts gerichtete Achsen drehen, insbesondere nach einem der vorhergehenden Ansprüche,
**dadurch gekennzeichnet, daß** die Stütze (14), wenn sich die Drehachse des Rechrades in der normalen Arbeitsposition befindet, einen sich nach unten erstreckenden Teil aufweist, in den ein nach hinten und oben gerichteter Teil (16) übergeht, der nach dem Umklappen des Rechkörpers auf dem Boden aufliegt.

6. Heuwerbungsmaschine nach Anspruch 5,
**dadurch gekennzeichnet, daß** der Arm (17) für das Laufrad (9) an dem nach unten gerichteten Teil der Stütze (14) befestigt ist.

7. Heuwerbungsmaschine nach Anspruch 5,
**dadurch gekennzeichnet, daß** der sich nach hinten und oben erstreckende Teil (16) der Stütze (14) einen Winkel von mindestens 45° und höchstens 75°, vorzugsweise von etwa 65°, mit der Drehachse (20) des Rechrades bildet.

8. Heuwerbungsmaschine nach einem der vorhergehenden Ansprüche,
**dadurch gekennzeichnet, daß** eine sich zumindest im wesentlichen In Arbeitsrichtung (13) der Maschine erstreckende Platte (18) an der Stütze (14) befestigt ist, wobei die Platte dazu dient, zumindest so weit wie möglich zu verhindern, daß sich an der Stütze (14) und an dem Arm (17) des Laufrades (9) Erntegut ansammelt.

## Revendications

1. Machine de fenaison pourvue d'éléments formant râteau entraînés mécaniquement (2 à 5) qui tournent autour d'axes orientés vers le haut, laquelle machine est supportée par des roues portantes (9), **caractérisée en ce qu'**au moins sous un ou plusieurs des éléments formant râteau (2 à 5), un support (14) est disposé, à l'aide duquel au moins l'un des éléments formant râteau (2 à 5), après avoir basculé, peut être supporté, lequel support (14) comprend également un bras (17) pour la roue portante (9).

2. Machine de fenaison selon la revendication 1, **caractérisée en ce que** l'élément formant râteau (2 à 5) est assemblé à un bras (17), par l'intermédiaire duquel bras (17) une roue portante (9) située sous l'élément formant râteau (2 à 5) est supportée, lequel bras (17) sert également en tant que support.

3. Machine de fenaison selon l'une quelconque des revendications précédentes, **caractérisée en ce que** le support (14) consiste en une pluralité de pièces (16 ; 17).

4. Machine de fenaison selon l'une quelconque des revendications précédentes, **caractérisée en ce que**, vu dans la direction de déplacement (13), le support (14) s'étend sensiblement parallèlement à un plan situé à côté de la roue portante (9).

5. Machine de fenaison pourvue d'éléments formant râteau entraînés mécaniquement (2 à 5) qui tournent autour d'axes orientés vers le haut, en particulier selon l'une quelconque des revendications précédentes, **caractérisée en ce que**, si l'axe de rotation de la roue de râteau se trouve dans la position de fonctionnement normale, le support (14) comporte une partie s'étendant vers le bas, dans laquelle partie se fond une partie s'étendant vers l'arrière et vers le haut (16) qui repose sur le sol une fois que l'élément formant râteau a basculé.

6. Machine selon la revendication 5, **caractérisée en ce que** le bras (17) pour la roue portante (9) est assemblé à la partie s'étendant vers le bas du support (14).

7. Machine de fenaison selon la revendication 5, **caractérisée en ce que** la partie s'étendant vers l'arrière et vers le haut (16) du support (14) forme un angle d'au moins 45° et ne dépassant pas 75°, de préférence d'environ 65°, avec l'axe de rotation (20) de la roue de râteau.

8. Machine de fenaison selon l'une quelconque des revendications précédentes, **caractérisée en ce qu'**une plaque (18) s'étendant au moins sensiblement dans la direction normale de déplacement (13) de la machine est fixée au support (14), laquelle plaque a pour objet d'empêcher, au moins autant que possible, la moisson de s'accumuler au niveau du support (14) et du bras (17) de la roue portante (9).
